# EUROPEAN PATENT SPECIFICATION

(11) **EP 4 172 015 B1**
(45) Date of publication and mention of the grant of the patent: **28.02.2024**
(21) Application number: 20735133.9
(22) Date of filing: 24.06.2020
(51) Int. Cl.: B60T 17/02, B60T 13/66

(54) **MOTOR VEHICLE VACUUM PUMP AND METHOD FOR CONTROLLING A MOTOR VEHICLE VACUUM PUMP**
KRAFTFAHRZEUG-VAKUUMPUMPE UND VERFAHREN ZUM STEUERN EINER KRAFTFAHRZEUG-VAKUUMPUMPE
POMPE À VIDE DE VÉHICULE À MOTEUR ET PROCÉDÉ DE COMMANDE D'UNE POMPE À VIDE DE VÉHICULE À MOTEUR

(43) Date of publication of application: 03.05.2023
(73) Proprietor: Pierburg Pump Technology GmbH, 41460 Neuss (DE)
(72) Inventor: PIOTROWSKI, Marcel, 41460 Neuss (DE); AL-HASAN, Nabil Salim, 41460 Neuss (DE); RUSS, Stanislaus, 41460 Neuss (DE); SCHULZ, Christian, 41460 Neuss (DE); GRÜNE, Tobias, 41460 Neuss (DE); STEPANOW, Michael, 41460 Neuss (DE)
(74) Representative: terpatent Patentanwälte und European Patent Attorneys ter Smitten Eberlein -Van Hoof
(86) International application number: PCT/EP2020/067667
(87) International publication number: WO 2021/259465

(56) References cited:
- EP-A2- 1 918 585
- EP-B1- 1 918 585
- WO-A1-2005/123476
- WO-A1-2020/074083
- DE-A1- 19 953 627
- KR-A- 20120 090 235

## Description

The present invention is directed to a motor vehicle vacuum pump, in particular to an electric rotary vane vacuum pump for providing vacuum to a motor vehicle brake booster. The present invention is also directed to a method for controlling such a motor vehicle vacuum pump.

Electric vacuum pumps are driven by an electric motor and are typically used in motor vehicles for providing vacuum to a brake booster of a motor vehicle braking system, in particular for providing vacuum to a vacuum chamber of the brake booster. The electric vacuum pump can be the only vacuum source for the brake booster, or can be used in combination with other vacuum sources as for example an intake system of an internal combustion engine.

The brake booster utilizes the pressure difference between its vacuum chamber pressure and the surrounding atmospheric pressure to enhance a mechanic brake force which is generated by pressing the brake pedal of the motor vehicle and which mechanically actuates the motor vehicle braking system. Providing the brake booster vacuum chamber with an adequate vacuum is therefore crucial to ensure a reliable operation of the brake booster and, as a result, to ensure a reliable and convenient operation of the motor vehicle braking system.

Modern motor vehicle electric vacuum pumps are provided with an electronically commutated electric motor which is free of mechanically abrading brush contacts and which allows an electronical control of its rotational motor speed. This provides a relatively durable and efficient motor vehicle vacuum pump.

Such a motor vehicle vacuum pump is, for example, disclosed in WO 2017/028839 A1. The vacuum pump comprises a pumping unit with a rotatable pump rotor, and an electronically commutated electric motor for driving the pump rotor. The vacuum pump also comprises a pump control unit for controlling a variable rotational motor speed of the electric motor, wherein the pump control unit is configured to drive the electric motor with an efficiency-optimized rotational motor speed.

However, the vacuum pump of WO 2017/028839 A1 can cause intense noise if the vacuum pump is operated at rotational motor speeds which cause pump vibrations with a frequency which is equal to or relatively close to a resonance frequency of the motor vehicle or of a motor vehicle component.

KR 2012 0090235 A discloses a vacuum pump control assembly for a vehicle, with an engine speed sensor, a vacuum pump connected to the speed sensor, and a controller controlling the operation state of the vacuum pump.

An object of the present invention is therefore to provide an efficient and low-noise motor vehicle vacuum pump.

This object is achieved with a motor vehicle vacuum pump with the features of claim 1 and with a method for controlling a motor vehicle vacuum pump with the features of claim 7.

The motor vehicle vacuum pump according to the present invention is provided with a pumping unit with a rotatable pump rotor. Preferably, the vacuum pump is a vane pump wherein the pump rotor comprises a rotor body which is eccentrically arranged in a substantially cylindrical pumping chamber and which comprises several radially slidable rotor vanes. During pump operation, the rotor vanes are in touching radial contact with a pumping chamber sidewall and define several rotating pumping-chamber compartments whose volume varies within one pump rotor revolution.

The motor vehicle vacuum pump according to the present invention is also provided with an electronically commutated electric motor for driving the pump rotor. The electronically commutated electric motor allows to electronically control a rotational motor speed of the electric motor. Typically, the electronically commutated electric motor is energized with a pulse-width-modulated drive energy, wherein an effective electrical drive power and thereby the rotational motor speed is controlled by controlling a duty cycle of the pulse width modulation. Typically, the electric motor comprises an electromagnetic motor stator with at least one stator coil, and comprises a permanent-magnetic motor rotor which is co-rotatably connected with the pump rotor.

The motor vehicle vacuum pump according to the present invention is also provided with a pump control unit which is configured to control the variable rotational motor speed of the electric motor. Preferably, the pump control unit is configured to provide a closed-loop control of the variable rotational motor speed, i.e. the pump control unit is configured to continuously adapt a motor drive power based on a motor-speed feedback signal to realize a desired set motor speed. Typically, the pump control unit is configured to control the rotational motor speed based on a pressure parameter which is provided by a motor vehicle pressure sensor. Typically, the pressure parameter indicates a present negative pressure or, in other words, a present difference pressure of a vacuum chamber of a motor vehicle brake booster relative to a present atmospheric pressure, wherein a greater (positive) pressure parameter indicates a lower absolute vacuum chamber pressure and a lesser (positive) pressure parameter indicates a higher absolute vacuum chamber pressure. The pump control unit is typically configured to switch on the electric motor if the received pressure parameter is below a critical-pressure threshold, and is configured to switch off the electric motor if the pressure parameter is equal to or greater than a target-pressure threshold.

According to the present invention, the pump control unit comprises a standard-operation control module which is configured to actively control the variable rotational motor speed during an evacuation process. The standard-operation control module is in particular configured to determine a standard-operation speed value, and to set the variable rotational motor speed corresponding to the standard-operation speed value. The standard-operation speed value can, for example, be determined based on a respective standard-operation control map. Alternatively, the standard-operation speed value can be determined adaptively based on a pump parameter. Typically, the standard-operation control module is configured to determine the standard-operation speed value based on the present pressure parameter. However, the standard-operation control module can also be configured to determine the standard-operation speed value based on any other pump parameter, e.g. a present evacuation cycle time point, a present pump temperature, a total pump operation time, etc. Preferably, the standard-operation control module is configured to determine efficiency-optimized and/or pump-lifetime-optimized standard-operation speed values.

According to the present invention, the pump control unit also comprises a noise reduction control module which is superordinate to the standard-operation control module meaning that the noise reduction control module can overrule the standard-operation control module. The noise reduction control module is in particular configured to overrule the standard-operation control module if the standard-operation speed value is within a noise-critical speed band, wherein the noise reduction control module is configured to set the variable rotational motor speed corresponding to a noise-optimized speed parameter in this case. According to the present invention, the noise-optimized speed value is defined outside of the noise-critical speed band so that the electric motor is always driven with an actual rotational motor speed which is outside of the noise-critical speed band. In the present context, the two limits of the noise-critical speed band are per definition outside of the noise-critical speed band. In particular, the upper limit of the noise-critical speed band is per definition higher than the noise-critical speed band, and the lower limit of the noise-critical speed band is per definition lower than the noise-critical speed band.

According to the present invention, the noise-critical speed band defines a continuous band/interval of motor speed values that generate an intense noise within a drivers/passenger compartment of the motor vehicle. The noise reduction control module can be provided with a single noise-critical speed band or can be provided with a plurality of separate noise-critical speed bands. In the latter case, the noise-optimized speed value is outside of all noise-critical speed bands, and the standard-operation control module is always overruled if the standard-operation speed value is inside of one of the noise-critical speed bands. The noise-critical speed band(s) can, for example, be determined by experimental motor-speed-dependent acoustic measurements in the drivers/passenger compartment or by motor-speed-dependent acoustic/vibrational simulations of the motor vehicle.

The standard-operation control module provides a reliable and efficient pump operation, wherein the noise reduction control module according to the present invention reliably avoids that the vacuum pump, in particular that the electric motor of the vacuum pump, is operated with a noise-critical rotational motor speed. This provides an efficient and low-noise motor vehicle vacuum pump.

It is explicitly noted that the functionality of the noise reduction control module according to the present invention can be integrated into the process of determining the standard-operation speed value. It is in particular possible that the variable rotational motor speed is controlled based on a single standard-operation control map, wherein the standard-operation control map is defined in that way that noise-critical motor speed values are substituted by noise-optimized motor speed values so that noise-critical motor speed values are not set.

In a preferred embodiment of the present invention, the noise-critical speed band is defined based on a motor vehicle resonance frequency. Preferably, all vehicle resonance frequencies of the motor vehicle are determined, e.g. by acoustic measurements and/or by acoustic/vibrational simulations. In addition, noise-critical rotational motor speeds that generate pump vibrations with a frequency which is equal to or close to a vehicle resonance frequency are determined, e.g. by motor-speed-dependent vibration measurements and/or simulations. The noise-critical speed band is defined based on the determined noise-critical rotational motor speeds. Preferably, the noise-critical speed band(s) is/are defined in that way that it/they comprise(s) all determined noise-critical rotational motor speeds within a motor speed operational range of the electric motor.

Preferably, the pump control unit is configured to determine at least one pump operation parameter, wherein the noise reduction control module is configured to define the noise-optimized speed value either higher or lower than the noise-critical speed band depending on the at least one pump operation parameter. Typically, the noise-optimized speed value is determined by comparing the pump operation parameter to a respective threshold value, wherein the noise-optimized speed value is defined higher or lower than the noise-critical speed band depending on whether the pump operation parameter is greater or lesser than the respective threshold value. The pump operation parameter can, for example, be an indicator for a present evacuation-demand. In this case, the noise-optimized speed value is defined higher than the noise-critical speed band if the pump operation parameter indicates a relatively high present evacuation-demand to ensure that the vacuum pump can provide the required vacuum, and is defined lower than the noise-critical speed band if the pump operation parameter indicates a relatively low present evacuation-demand requirement to reduce pump wear. Alternatively, the pump operation parameter can, for example, be an indicator for a present "health" status of the vacuum pump. In this case, the noise-optimized speed value is defined lower than the noise-critical speed band if the pump operation parameter indicates a critical present pump status to avoid damage and/or failure of the vacuum pump, and is defined higher than the noise-critical speed band if the pump operation parameter indicates a uncritical present pump status to provide a high pump performance. This provides reliable and durable motor vehicle vacuum pump.

In a preferred embodiment of the present invention, a pressure sensor connector is provided which is configured to, typically periodically, receive a pressure parameter provided by a motor vehicle pressure sensor, wherein the pressure parameter defines one pump operation parameter based on which the noise-optimized speed value is defined. Preferably, the vacuum pump is provided with a vehicle-data-bus connector which is configured to provide a data communication with other motor vehicle units via a vehicle data bus system, e.g. via a motor vehicle CAN bus system. In this case, the pressure parameter is typically received via the vehicle data bus system meaning that the pressure sensor connector is defined by the vehicle-data-bus connector. Alternatively, the vacuum pump can be provided with a separate pressure sensor connector for providing a direct electrical connection to the motor vehicle pressure sensor. The pressure parameter can be received via an analog pressure signal whose present amplitude and/or frequency indicates the present pressure parameter, or can be received via a digital signal transmitting a digitally encoded pressure parameter. Generally, the pressure parameter can be received via any kind of signal allowing a parameter transmission.

The pressure parameter typically indicates either a present vacuum chamber negative pressure or a present vacuum chamber difference pressure relative to a present atmospheric pressure. In any case, a greater (positive) pressure parameter indicates a lower absolute vacuum chamber pressure, and a lesser (positive) pressure parameter indicates a higher absolute vacuum chamber pressure. Typically, the noise reduction control module is configured to define the noise-optimized speed value higher than the noise-critical speed band if the pressure parameter is below a defined pressure threshold to generate a relatively high pump performance and to thereby achieve a relatively fast evacuation. The noise reduction control module is configured to define the noise-optimized speed value lower than the noise-critical speed band if the pressure parameter is above the defined pressure threshold to reduce the pump wear. This provides a reliable and durable motor vehicle vacuum pump.

Preferably, a temperature sensor is provided which is configured to detect a pump temperature parameter, and wherein the pump temperature parameter defines one pump operation parameter based on which the noise-optimized speed value is defined. Typically, the temperature sensor is arranged inside of a vacuum pump housing and measures, for example, a present motor temperature or a present pump control unit temperature. In any case, the temperature parameter indicates a pump temperature which needs to be below a defined critical temperature to avoid a damage or failure of the vacuum pump. In this case, the noise reduction control module is configured to define the noise-optimized speed value lower than the noise-critical speed band if the temperature parameter is above a defined critical temperature threshold to avoid a damage or failure of the vacuum pump. This provides a reliable and durable motor vehicle vacuum pump.

In a preferred embodiment of the present invention, the critical speed band is provided with a bandwidth of at least 100 Revolutions-per-Minute (RPM), more preferably, of at least 200 RPM. This provides a reliable noise reduction and thus provides a low-noise motor vehicle vacuum pump.

The method for controlling a motor vehicle vacuum pump according to the present invention comprises determining at least one resonance frequency of a motor vehicle and/or a motor vehicle component. Preferably, all vehicle resonance frequencies of the motor vehicle and motor vehicle components are determined. The resonance frequencies can, for example, be determined by acoustic measurements and/or by acoustic/vibrational simulations. The resonance frequencies are typically determined in a laboratory.

The method for controlling a motor vehicle vacuum pump according to the present invention also comprises defining at least one noise-critical speed band based on the determined at least one resonance frequency. The at least one noise-critical speed band comprises at least one noise-critical rotational motor speed that generates pump vibrations with a frequency which is equal to or close to a determined vehicle resonance frequency. Preferably, all noise-critical rotational motor speeds for a respective application are determined, wherein the at least one noise-critical motor speed band comprises all noise-critical motor speed values. The at least one noise-critical rotational speed band can, for example, be determined by motor-speed-dependent vibration measurements and/or simulations. It is also possible that the at least one noise-critical speed band is directly determined by motor-speed-dependent acoustic measurements or acoustic simulations without explicitly determining the at least one resonance frequency. However, in this case, the at least one resonance frequency is implicitly determined via the at least one noise critical speed band. The at least one noise-critical speed band is typically determined/defined in a laboratory.

The method for controlling a motor vehicle vacuum pump according to the present invention also comprises controlling a variable rotational motor speed of the electric motor in that way that the electric motor is operated only at rotational motor speeds which are outside the at least one noise-critical speed band.

The method for controlling a motor vehicle vacuum pump according to the present invention reliably avoids that the vacuum pump, in particular that the electric motor of the vacuum pump, is operated with a noise-critical rotational motor speed. This provides an efficient and low-noise motor vehicle vacuum pump.

Preferably, the method for controlling a motor vehicle vacuum pump according to the present invention comprises defining a noise-optimized control map with at least one motor speed value, wherein the a noise-optimized control map is defined in that way that all motor speed values are outside of the at least one noise-critical speed band, and controlling the variable rotational motor speed based on the noise-optimized control map. The noise-optimized control map typically comprises a plurality of pressure-dependent and/or evacuation-cycle-time-point-dependent noise-optimized speed values which define a motor speed progression during an evacuation cycle. Preferably, the speed values define an pump-lifetime-optimized and/or efficiency-optimized motor speed progression, wherein those motor speed values which normally would be inside the at least one noise-critical motor speed band are substituted with noise-optimized motor speed values which are outside of the at least one noise-critical motor speed band. This provides an efficient and low-noise motor vehicle vacuum pump.

Two embodiments of the present invention are described with reference to the enclosed drawings, wherein
figure 1 shows a schematic illustration of a part of a motor vehicle braking system with a motor vehicle brake booster and with a motor vehicle vacuum pump according to a first embodiment of the present invention,
figure 2 shows two graphs of an actual rotational motor speed of an electric motor of the vacuum pump of figure 1 as a function of an standard-operation speed value, wherein the standard-operation speed value is overwritten with a higher (left) or lower (right) noise-optimized speed value if the standard-operation speed value is inside of a noise-critical speed band, and
figure 3 shows the vehicle braking system of figure 1 with a motor vehicle vacuum pump according to a second embodiment of the present invention.

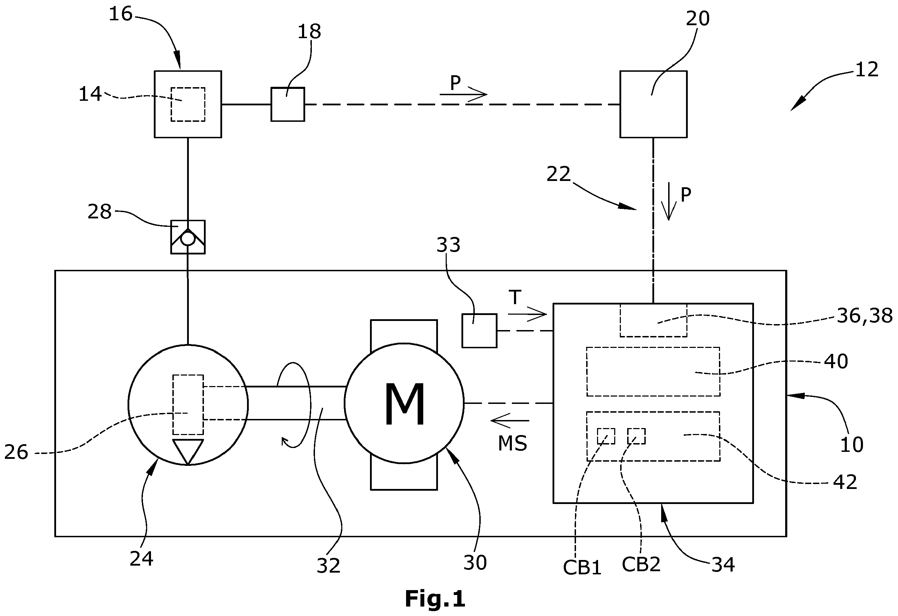

Fig. 1 shows a motor vehicle vacuum pump 10 which is used in a motor vehicle braking system 12 for providing a vacuum to a vacuum chamber 14 of a motor vehicle brake booster 16.

The motor vehicle braking system 12 also comprises a motor vehicle pressure sensor 18 which is fluidically connected to the vacuum chamber 14 and which is configured to measure a vacuum chamber difference pressure relative to atmospheric pressure. The motor vehicle pressure sensor 18 is furthermore configured to provide a pressure parameter P, which indicates the measured vacuum chamber difference pressure, to a motor vehicle control unit 20. The motor vehicle control unit 20 is connected to a vehicle data bus system 22 which is configured to allow a data communication between connected motor vehicle units.

The motor vehicle vacuum pump 10 comprises a pumping unit 24 with a rotatable pump rotor 26. In the present embodiment, the motor vehicle vacuum pump 10 is a rotary vane pump wherein the pump rotor 26 comprises a plurality of rotor vanes which are configured to be radially slidable and to rotate within a substantially cylindrical pumping chamber. The pumping unit 24 is fluidically connected to the vacuum chamber 14 of the motor vehicle brake booster 16 via a check valve 28. The pumping unit 24 is configured to evacuate the vacuum chamber 14.

The motor vehicle vacuum pump 10 also comprises an electronically commutated electric motor 30 which is configured to drive the pump rotor 26 via a rotor shaft 32 which is co-rotatably connected with the pump rotor 26. The electric motor 30 is configure to be operated with a variable rotational motor speed.

The motor vehicle vacuum pump 10 also comprises a temperature sensor 33 which is configured to detect a pump temperature parameter T. In the present embodiment, the temperature sensor 33 is arranged at or close to the electric motor 30 and the pump control unit 34 and the pump temperature parameter T indicates a present electric-motor temperature and/or a present pump-control-unit temperature.

The motor vehicle vacuum pump 10 also comprises a pump control unit 34 which is configured to provide a closed-loop control of the variable rotational motor speed of the electric motor 30. The pump control unit 34 is connected to the vehicle data bus system 22 via a vehicle-data-bus connector 36 which is configured to allow a data communication via the vehicle data bus system 22.

In the present embodiment, the pump control unit 34 is configured to periodically read out the pressure parameter P from the motor vehicle control unit 20 via the vehicle data bus system 22. The vehicle-data-bus connector 36 thus defines a pressure sensor connector 38 which is configured to receive the pressure parameter P provided by the motor vehicle pressure sensor 18. In an alternative embodiment, the pump control unit 34 can be directly electrically connected to the motor vehicle pressure sensor 18 via a separate pressure sensor connector.

The pump control unit 34 is electrically connected to the temperature sensor 33 and is configured to receive or read out the pump temperature parameter T from the temperature sensor 33.

The pump control unit 34 is configured to control an actual rotational motor speed MS of the electric motor 30 based on the pressure parameter P. The pump control unit 34 is in particular configured to switch on the electric motor 30 (MS > 0) if the last received pressure parameter P is below a defined critical-pressure threshold, and is configured to switch off the electric motor 30 (MS = 0) if the last received pressure parameter P is equal to or greater than a defined target-pressure threshold.

According to the present invention, the pump control unit 34 comprises a standard-operation control module 40 which is configured to actively control the actual rotational motor speed MS of the electric motor 30 if the electric motor 30 is switched on. The standard-operation control module 40 is in particular configured to determine a standard-operation speed value SO based on the pressure parameter P, and to set the actual rotational motor speed MS corresponding to the determined standard-operation speed value SO.

According to the present invention, the pump control unit 34 also comprises a noise reduction control module 42 which, in the present embodiment, is provided with two noise-critical speed bands CB1,CB2 which both are defined based on a measured resonance frequency of the motor vehicle and/or of a motor vehicle component and which, in the present embodiment, both are provided with a bandwidth in the range of 200 RPM to 250 RPM. The noise reduction control module 42 is configured to continuously monitor the standard-operation speed value SO determined by the standard-operation control module 40. The noise reduction control module 42 is in particular configured to determine whether the standard-operation speed value SO is inside of one of the noise-critical speed bands CB1,CB2.

The noise reduction control module 42 is configured to overrule the standard-operation control module 40 if the standard-operation speed value SO is inside of one of the noise-critical speed bands CB1,CB1. The noise critical control module 42 is in particular configured to set the actual rotational motor speed MS corresponding to a first noise-optimized speed value NO1 if the standard-operation speed value SO is inside of the first noise-critical speed band CB1, and to set the actual rotational motor speed MS corresponding to a second noise-optimized speed value NO2 if the standard-operation speed value SO is inside of the second noise-critical speed band CB2.

In the present embodiment, the noise-optimized speed values NO1,NO2 are defined based on two pump operation parameters which are defined by the pump temperature parameter T and the pressure parameter P. The noise-optimized speed values NO1,NO2 are defined higher than the respective noise-critical speed band CB1,CB2 if the pressure parameter P is below a pressure threshold value and if the pump temperature parameter T is below a temperature threshold value. The noise-optimized speed values NO1,NO2 are defined lower than the respective noise-critical speed band CB1,CB2 either if the pressure parameter P is above the pressure threshold value or if the pump temperature parameter T is above the temperature threshold value. In the present embodiment, the noise-optimized speed values NO1,NO2 are defined equal to the upper limit of the respective noise-critical motor speed band in the first case, and are defined equal to the lower limit of the respective noise-critical motor speed band in the latter case.

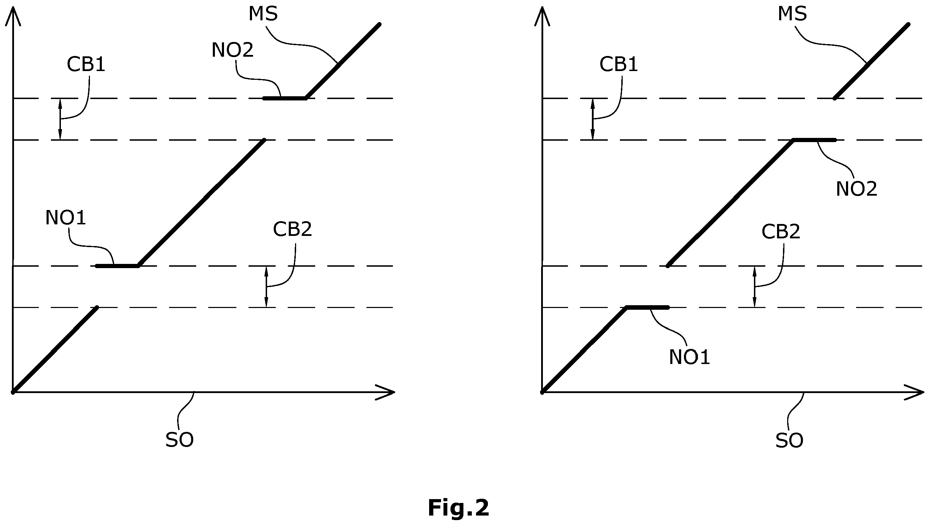

Fig. 2 show the progression of the actual rotational motor speed MS as a function of the standard-operation speed value SO for the case that the noise-optimized speed values NO1,NO2 are defined higher than the respective noise-critical speed band CB1,CB2 (left graph) and for the case that the noise-optimized speed values NO1,NO2 are defined lower than the respective noise-critical speed band CB1,CB2 (right graph).

As visible in Fig. 2, the noise reduction control module 42 according to the present invention reliably avoids that the electric motor 30 is driven with an actual rotational motor speed MS which is inside of a noise-critical speed band CB1,CB2.

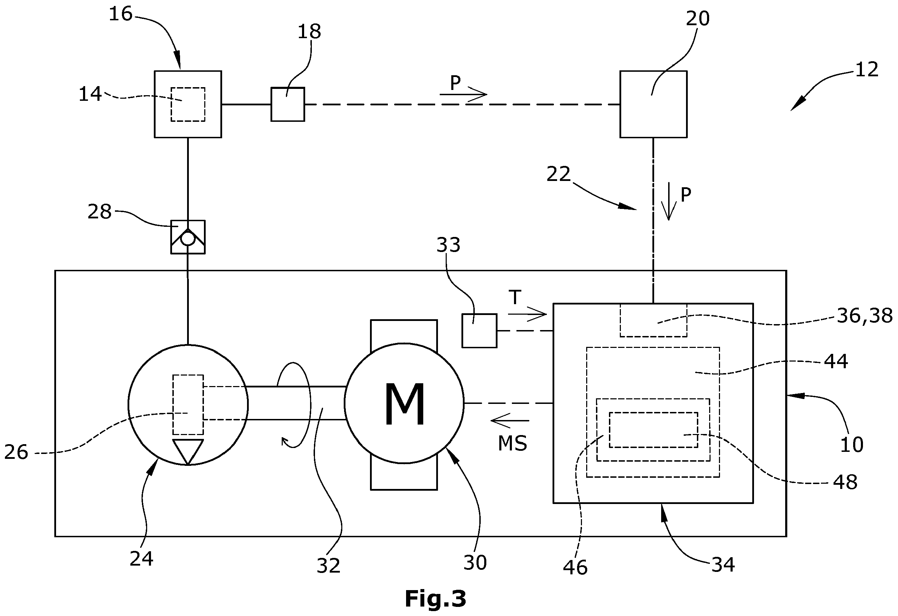

Fig. 3 shows a motor vehicle braking system with an alternative embodiment of the motor vehicle vacuum pump according to the invention. Elements/Features of this motor vehicle braking system which provide the same functionality as the corresponding elements/features of the motor vehicle braking system of figure 1 are provided with the same reference number as in figure 1.

The pump control unit 34' of the motor vehicle vacuum pump 10' of figure 3 comprises a noise-optimizing control module 44 which is configured to provide the functionality of the standard-operation control 40 as well as of the noise reduction control module 42 of the motor vehicle vacuum pump 10 according to the first embodiment of the present invention.

The noise-optimizing control module 44 comprises a control map storage 46 which stores a noise-optimized control map 48 with pressure-parameter-dependent and temperature-dependent motor speed values. The noise-optimized control map 48 in particular comprises efficiency-optimized and pump-lifetime-optimized standard-operation speed values SO, wherein those standard-operation speed values SO which would be inside the noise-critical motor speed bands CB1,CB2 are substituted with respective noise-optimized speed values NO1,NO2 as indicated by Fig. 2. The noise-optimized control map 48 thus comprises only motor speed values which are outside of the noise-critical motor speed bands CB1,CB2.

The noise-optimizing control module 44 is configured to determine a standard-operation speed value SO based on the pressure parameter P, the temperature parameter T and the noise-optimized control map 46, and is configured to set the actual rotational motor speed MS corresponding to the determined standard-operation speed value SO.

### Reference List

- 10;10': motor vehicle vacuum pump
- 12;12': motor vehicle braking system
- 14: vacuum chamber
- 16: motor vehicle brake booster
- 18: motor vehicle pressure sensor
- 20: motor vehicle control unit
- 22: vehicle data bus system
- 24: pumping unit
- 26: pump rotor
- 28: check valve
- 30: electronically commutated electric motor
- 32: rotor shaft
- 33: temperature sensor
- 34;34': pump control unit
- 36: vehicle-data-bus connector
- 38: pressure sensor connector
- 40: standard-operation control module
- 42: noise reduction control module
- 44: noise-optimizing control module
- 46: control map storage
- 48: noise-optimized control map

- CB1,CB2: noise-critical speed bands
- MS: actual rotational motor speed
- NO1,NO2: noise-optimized speed values
- P: pressure parameter
- SO: standard-operation speed value
- T: pump temperature parameter

## Claims

1. A motor vehicle vacuum pump (10;10'), comprising
- a pumping unit (24) with a rotatable pump rotor (26),
- an electronically commutated electric motor (30) for driving the pump rotor (26), and
- a pump control unit (34;34') for controlling a variable rotational motor speed (MS) of the electric motor (30), **characterised in that**
the pump control unit (34;34) comprises
- a standard-operation control module (40;44) which is configured to determine a standard-operation speed value (SO), and to set the variable rotational motor speed (MS) corresponding to the standard-operation speed value (SO), and
- a noise reduction control module (42;44) which is configured to overrule the standard-operation control module (40;44) if the standard-operation speed value (SO) is within a noise-critical speed band (CB1,CB2), **in that** way that the variable rotational motor speed (MS) is set corresponding to a noise-optimized speed value (NO1,NO2) which is outside of the noise-critical speed band (CB1,CB2) in this case.

2. The motor vehicle vacuum pump (10;10') according to claim 1, wherein the noise-critical speed band (CB1,CB2) is defined based on a resonance frequency of a motor vehicle and/or of a motor vehicle component.

3. The motor vehicle vacuum pump (10;10') according to one of the preceding claims, wherein the pump control unit (34) is configured to determine at least one pump operation parameter (P,T), and wherein the noise reduction control module (42;44) is configured to define the noise-optimized speed value (NO1,NO2) either higher or lower than the noise-critical speed band (CB1,CB2) depending on the at least one pump operation parameter (P,T).

4. The motor vehicle vacuum pump (10;10') according to claim 3, wherein a pressure sensor connector (38) is provided which is configured to receive a pressure parameter (P) provided by a motor vehicle pressure sensor (18), and wherein the pressure parameter (P) defines one pump operation parameter.

5. The motor vehicle vacuum pump (10;10') according to claim 3 or 4, wherein a temperature sensor (33) is provided which is configured to detect a pump temperature parameter (T), and wherein the pump temperature parameter (T) defines one pump operation parameter.

6. The motor vehicle vacuum pump (10;10') according to one of the preceding claims, wherein the critical speed band (CB1,CB2) is provided with a bandwidth of at least 100 RPM.

7. A method for controlling a motor vehicle vacuum pump (10;10') with an electronically commutated electric motor (30), the method **characterised in that** it comprises
- determining at least one resonance frequency of a motor vehicle and/or a motor vehicle component,
- defining at least one noise-critical speed band (CB1,CB2) based on the determined at least one resonance frequency,
- controlling a variable rotational motor speed (MS) of the electric motor (30) **in that** way that the electric motor (30) is operated only at rotational motor speeds (MS) which are outside of all of the at least one noise-critical speed band (CB1,CB2).

8. The method for controlling a motor vehicle vacuum pump (10') according to claim 7 comprising
- defining a noise-optimized control map (46) with at least one motor speed value, wherein the noise-optimized control map (46) is defined in that way that all motor speed values of the noise-optimized control map (46) are outside of all of the at least one noise-critical speed band (CB1,CB2), and
- controlling the variable rotational motor speed (MS) based on the noise-optimized control map (46).

## Patentansprüche

1. Kraftfahrzeugvakuumpumpe (10; 10'), umfassend
- eine Pumpeinheit (24) mit einem drehbaren Pumpenrotor (26),
- einen elektronisch kommutierten Elektromotor (30) zum Antreiben des Pumpenrotors (26), und
- eine Pumpensteuereinheit (34; 34') zum Steuern einer variablen Motordrehzahl (MS) des Elektromotors (30), **dadurch gekennzeichnet, dass**
die Pumpensteuereinheit (34; 34) umfasst
- ein Standardbetriebssteuermodul (40; 44), das eingerichtet ist, einen Standardbetriebsdrehzahlwert (SO) zu bestimmen und die variable Motordrehzahl (MS) entsprechend dem Standardbetriebsdrehzahlwert (SO) einzustellen, und
- ein Geräuschreduktionssteuermodul (42; 44), das eingerichtet ist, das Standardbetriebssteuermodul (40; 44) zu übersteuern, wenn der Standardbetriebsdrehzahlwert (SO) innerhalb eines geräuschkritischen Drehzahlbandes (CB1, CB2) liegt, derart, dass die variable Motordrehzahl (MS) in diesem Fall entsprechend einem geräuschoptimierten Drehzahlwert (NO1, NO2) eingestellt wird, der außerhalb des geräuschkritischen Drehzahlbandes (CB1, CB2) liegt.

2. Kraftfahrzeugvakuumpumpe (10; 10') nach Anspruch 1, wobei das geräuschkritische Drehzahlband (CB1, CB2) basierend auf einer Resonanzfrequenz eines Kraftfahrzeugs und/oder einer Kraftfahrzeugkomponente definiert ist.

3. Kraftfahrzeugvakuumpumpe (10; 10') nach einem der vorhergehenden Ansprüche, wobei die Pumpensteuereinheit (34) eingerichtet ist, mindestens einen Pumpenbetriebsparameter (P, T) zu bestimmen, und wobei das Geräuschreduzierungssteuermodul (42; 44) eingerichtet ist, den geräuschoptimierten Drehzahlwert (NO1, NO2) in Abhängigkeit von dem mindestens einen Pumpenbetriebsparameter (P, T) entweder höher oder niedriger als das geräuschkritische Drehzahlband (CB1, CB2) festzulegen.

4. Kraftfahrzeugvakuumpumpe (10; 10') nach Anspruch 3, wobei ein Drucksensoranschluss (38) vorhanden ist, der eingerichtet ist, einen von einem Kraftfahrzeugdrucksensor (18) bereitgestellten Druckparameter (P) zu empfangen, und wobei der Druckparameter (P) einen Pumpenbetriebsparameter bildet.

5. Kraftfahrzeugvakuumpumpe (10; 10') nach Anspruch 3 oder 4, wobei ein Temperatursensor (33) vorhanden ist, der eingerichtet ist, einen Pumpentemperaturparameter (T) zu erfassen, und wobei der Pumpentemperaturparameter (T) einen Pumpenbetriebsparameter bildet.

6. Kraftfahrzeugvakuumpumpe (10; 10') nach einem der vorhergehenden Ansprüche, wobei der kritische Drehzahlbereich (CB1, CB2) eine Bandbreite von mindestens 100 U/min aufweist.

7. Verfahren zum Steuern einer Kraftfahrzeugvakuumpumpe (10; 10') mit einem elektronisch kommutierten Elektromotor (30), wobei das Verfahren **dadurch gekennzeichnet ist, dass** es umfasst
- Bestimmen mindestens einer Resonanzfrequenz eines Kraftfahrzeugs und/oder einer Kraftfahrzeugkomponente,
- Festlegen mindestens eines geräuschkritischen Drehzahlbandes (CB1, CB2) basierend auf der ermittelten mindestens einen Resonanzfrequenz,
- Steuern einer variablen Motordrehzahl (MS) des Elektromotors (30) derart, dass der Elektromotor (30) nur bei Motordrehzahlen (MS) betrieben wird, die außerhalb aller der mindestens einen geräuschkritischen Drehzahlbänder (CB1, CB2) liegen.

8. Verfahren zum Steuern einer Kraftfahrzeugvakuumpumpe (10') nach Anspruch 7, umfassend
- Festlegen eines geräuschoptimierten Steuerkennfeldes (46) mit mindestens einem Motordrehzahlwert, wobei das geräuschoptimierte Steuerkennfeld (46) derart festgelegt wird, dass alle Motordrehzahlwerte des geräuschoptimierten Steuerkennfeldes (46) außerhalb aller der mindestens einen geräuschkritischen Drehzahlbänder (CB1, CB2) liegen, und
- Steuern der variablen Motordrehzahl (MS) basierend auf dem geräuschoptimierten Steuerkennfeld (46).

## Revendications

1. Pompe vide de véhicule moteur (10;10'), qui comprend
- une unité de pompage (24) avec un rotor de pompe rotatif (26),
- un moteur électrique à commutation électronique (30) pour entraîner le rotor de pompe (26), et
- une unité de contrôle de la pompe (34;34') pour contrôler une vitesse de rotation du moteur (MS) variable du moteur électrique (30), **caractérisée en ce que**
l'unité de contrôle de la pompe (34;34) comprend
- un module de contrôle de fonctionnement standard (40;44) configuré pour déterminer une valeur de vitesse de fonctionnement standard (SO) et pour régler la vitesse de rotation variable du moteur (MS) correspondant à la valeur de vitesse de fonctionnement standard (SO), et
- un module de contrôle de réduction du bruit (42;44) configuré pour annuler le module de contrôle de fonctionnement standard (40;44) si la valeur de vitesse de fonctionnement standard (SO) est comprise dans une bande de vitesse critique en termes de bruit (CB1,CB2), de sorte que la vitesse de rotation variable du moteur (MS) est réglée en fonction d'une valeur de vitesse optimisée en termes de bruit (NO1,NO2) qui est en dehors de la bande de vitesse critique en termes de bruit (CB1,CB2) dans ce cas.

2. Pompe vide de véhicule moteur (10;10') selon la revendication 1, dans laquelle la bande de vitesse critique en termes de bruit (CB1,CB2) est définie sur la base d'une fréquence de résonance d'un véhicule moteur et/ou d'un composant du véhicule moteur.

3. Pompe vide de véhicule moteur (10;10') selon l'une des revendications précédentes, dans laquelle l'unité de contrôle de pompe (34) est configurée pour déterminer au moins un paramètre de fonctionnement de la pompe (P,T), et dans laquelle le module de contrôle de réduction de bruit (42;44) est configuré pour définir la valeur de vitesse optimisée en fonction du bruit (NO1,NO2) supérieure ou inférieure à la bande de vitesse critique en termes de bruit (CB1,CB2) en fonction du au moins un paramètre de fonctionnement de la pompe (P,T).

4. Pompe vide de véhicule moteur (10;10') selon la revendication 3, dans laquelle il est fourni un connecteur de capteur de pression (38) configuré pour recevoir un paramètre de pression (P) fourni par un capteur de pression de véhicule moteur (18), et dans laquelle le paramètre de pression (P) définit un paramètre de fonctionnement de la pompe.

5. Pompe vide de véhicule moteur (10;10') selon la revendication 3 ou 4, dans laquelle un senseur de température (33) est fourni qui est configuré pour détecter un paramètre de température de la pompe (T), et dans laquelle le paramètre de température de la pompe (T) définit un paramètre de fonctionnement de la pompe.

6. Pompe vide de véhicule moteur (10;10') selon l'une des revendications précédentes, dans laquelle la bande de vitesse critique (CB1,CB2) est fournie avec une largeur de bande d'au moins 100 RPM.

7. Méthode de contrôle d'une pompe vide de véhicule moteur (10;10') avec un moteur électrique à commutation électronique (30), la méthode comprend
- déterminer au moins une fréquence de résonance d'un véhicule moteur et/ou d'un composant de véhicule moteur,
- définir au moins une bande de vitesse critique en termes de bruit (CB1,CB2) sur la base de l'au moins une fréquence de résonance déterminée,
- contrôler une vitesse variable de rotation (MS) du moteur électrique (30) de manière à ce que le moteur électrique (30) soit uniquement actionné à des vitesses de rotation du moteur (MS) qui sont en dehors de toute la bande de vitesse critique en termes de bruit (CB1, CB2).

8. Méthode de contrôle d'une pompe vide de véhicule moteur (10') selon la revendication 7, comprenant
- définir une carte de contrôle optimisée en termes de bruit (46) avec au moins une valeur de vitesse de rotation du moteur, dans laquelle la carte de contrôle optimisée en termes de bruit (46) est définie de telle sorte que toutes les valeurs de vitesse de rotation du moteur de la carte de contrôle optimisée en termes de bruit (46) sont en dehors de l'ensemble de la au moins une bande de vitesse critique en termes de bruit (CB1,CB2), et
- contrôler la vitesse variable de rotation du moteur (MS) sur la base de la carte de contrôle optimisée en fonction du bruit (46).
